# EUROPEAN PATENT SPECIFICATION

(11) **EP 1 287 719 B1**
(45) Date of publication and mention of the grant of the patent: **15.10.2008**
(21) Application number: 02702431.4
(22) Date of filing: 04.03.2002
(51) Int. Cl.: H04Q 7/38, H04Q 7/24

(54) **SUPPORT OF GROUP TRAFFIC IN TELECOMMUNICATION NETWORK**
UNTERSTÜTZUNG VON GRUPPENVERKEHR IN EINEM TELEKOMMUNIKATIONSNETZ
SUPPORT DU TRAFIC DE GROUPE DANS UN RESEAU DE TELECOMMUNICATION

(30) Priority: 05.03.2001 FI 20010434
(43) Date of publication of application: 05.03.2003
(73) Proprietor: EADS Secure Networks Oy, 00380 Helsinki (FI)
(72) Inventor: PALTEMAA, Ilpo, FIN-02130 Espoo (FI)
(74) Representative: Äkräs, Tapio Juhani
(86) International application number: PCT/FI2002/000163
(87) International publication number: WO 2002/071783

(56) References cited:
- WO-A1-99/63779
- US-A- 5 752 196
- US-B1- 6 181 939

## Description

### BACKGROUND OF THE INVENTION

The invention relates to telecommunication technology, and particularly to mechanisms supporting group traffic.

In radio telephone networks used by fire and rescue authorities, police authorities or private companies, the group traffic between authorities carrying out an official task is the most important communication in the network. Such networks are often called PMR (Private or Professional Mobile Radio) networks. TETRA (TErrestrial Trunked RAdio) is a standard specified by ETSI (European Telecommunications Standards Institute) for digital PMR systems. Group traffic can be defined as traffic which allows a call or another data transfer or telecommunication procedure to be simultaneously set up for a predetermined group of users. Usually, group traffic is implemented as push-to-talk, release-to-listen type of traffic, wherein a radio channel is reserved for as long as a pressel of a telephone is being pressed, and possibly for a certain time, which is called a guard time, after the pressel has been released.

In different error situations in a communication network, a situation may occur wherein the necessary subscriber information for securing or continuing telecommunication is not available e.g. from a HLR (Home Location Register) or a previously visited VLR (Visitor Location Register). This may be caused e.g. by an earthquake or a sabotage operation having destroyed the transmission paths between the exchange serving a mobile station and the exchanges/registers storing the necessary subscriber information.

In the different error situations in the communication network and in different disasters as well, the group traffic between the authorities carrying out the same task should, however, be secured in one way or another. In addition, group traffic should be secured such that in normal circumstances the group traffic network load remains as low as possible.

US-A-5 752 196 describes a method for maintaining group data relating to a communication group. To optimize the management of group data, one of a plurality of exchanges is selected as a main exchange in the database of which a master copy of group data of the communication group is maintained. The group data are stored in these exchanges, if subscribers belonging to the communication group, register under the exchanges.

US-B1-6 181 939 describes a method of processing mobile station data in a mobile communication system in which the subscriber data of a mobile station are registered in a visitor location register. In order to avoid unnecessary deletion and re-registration of the subscriber data, the method comprises the steps of: defining an algorithm in order to determine a storage time for the subscriber data, storing in a memory information on the entries of the mobile station into the coverage area, determining the storage time with the help of the algorithm and the information stored in the memory, and after the mobile station has left the area, deleting its subscriber data from the visitor location register after the expiration of the storage time unless the mobile station has re-entered the coverage area.

WO 99 63779 A1 describes a method for reducing communications with, and signaling to and from, an HLR for local or MSC-originated calls. When a subscriber registers with the HLR, the complete profile for that subscriber is transferred to the VLR associated with the MSC involved. When a call to the subscriber is originated in the MSC, the VLR associated with that MSC is checked to determine, if the subscriber's location information is already maintained in the VLR. If so, the MSC can page and route the call to the subscriber's mobile phone via the base station transmitter associated with the VLR. As such, for such local MSC-originated calls, there is no need to interrogate the HLR for subscriber information, thus reducing signaling to and from the HLR.

### BRIEF DESCRIPTION OF THE INVENTION

An object of the invention is to secure local group traffic also in error situations wherein group information cannot be retrieved from other network elements. This is achieved by a method and a serving network element which are characterized by what is disclosed in the independent claims. Preferred embodiments of the invention are disclosed in dependent claims.

In the present invention, a mobile exchange or another serving network element, after having detected that group information cannot be obtained from a subscriber's home location register or old location exchange, asks a subscriber's mobile station for the group traffic groups programmed therein. The mobile station replies by reporting the groups programmed therein. The exchange stores the received group information and uses it for maintaining normal group traffic.

In a preferred embodiment of the invention, the exchange or another serving network element checks whether the subscriber is located within the area of each group, and transmits information on the groups that are available to the subscriber, information on the groups that are unavailable to the subscriber, or both pieces of the information as an acknowledgement to the mobile station. The mobile station can show the user, i.e. the subscriber, the information on the groups that are available in the particular cell. The exchange stores the received group information and uses it for maintaining normal group traffic.

The invention enables the users to continue traffic in speech groups although the network elements or the communication links between the elements were even badly destroyed e.g. by an earthquake.

### BRIEF DESCRIPTION OF THE DRAWINGS

The invention is now described in closer detail in connection with the preferred embodiments and with reference to the accompanying drawings, in which
Figure 1 illustrates a network architecture and storing subscriber information and location information,
Figure 2 illustrates a group call facility of a subscriber, and
Figure 3 illustrates updating subscriber group information.

### DETAILED DESCRIPTION OF THE INVENTION

The invention will be described using a PMR network, and particularly a TETRA network, as an example. The detailed structure and operation of the TETRA network other than that shown in the following figures are not, however, relevant to the invention. It is to be noted, however, that the invention can also be applied to other fixed and/or mobile telecommunication and data networks that support a group traffic mechanism.

The term "group" used herein refers to any logical group of three or more users that are to participate in the same group call or group traffic. In this connection, group traffic also covers e.g. message services wherein the same data message is transmitted to all members in a group. The groups are created logically, i.e. particular group call information maintained on the network side associates with a particular group call of a particular user. This association can be easily changed or removed by the user, operator or the like. The same user may be a member of (and even simultaneously active in) more than one group traffic group. Typically, the members of a group belong to the same organization, such as the police, fire service or a private company. An organization typically has several group traffic groups.

The speech group traffic is usually implemented as push-to-talk, release-to-listen type of traffic, wherein a radio channel is reserved for as long as a pressel of a telephone is being pressed, and possibly for a certain time, which is called a guard time, after the pressel has been released. In other words, the user indicates that he or she wishes to talk by pressing the pressel in his or her telephone, whereby the telephone transmits a service request to the network. The network either rejects or allocates the requested resources based on a predetermined criterion, such as resource availability, priority of the requesting user, etc. At the same time, a connection is being set up also to other active users in the particular subscriber group. When the speech connection has been set up, the requesting user may talk and the others may listen on the channel. When the user releases the pressel, the telephone signals a release message to the network, and the resources will be released. Hence, the resources are reserved only for the duration of the actual speech item.

Alternatively, the resources can be released only after a given time when the user has released the pressel. The network can wait for a speech item of another member of the group for a certain time called a guard time. If, however, no speech item is initiated during the guard time, the network releases the resources. This procedure enables the use of the total network resources to be intensified.

In another situation wherein one member of the group is speaking, another member/other members of the group may press the pressel. Callers wishing to be given a speech item can then, according to some criterion, form a queue, and when the first caller terminates his or her speech item, releasing the pressel, the network can give the transmission turn to a member of the group in the queue before the resources are released. It is to be noted that although group traffic is conventionally carried out using circuit-switched connections, the same principle is nowadays also applied to connectionless networks, such as packet data networks and/or networks called all-IP networks wherein also the internal traffic of the mobile communication network is based on IP (Internet Protocol) protocol. Speech transmission can then be based e.g. on a technique called VoIP (Voice over Internet Protocol). Furthermore, the group traffic in such networks may utilize e.g. a technique called IP multicasting.

In order for the network or the network element serving the user, i.e. the mobile station subscriber, to be capable of attaching the subscriber to a group traffic group when the user registers in the network, or to set up a group call when the user requests a call, the network or the network element must know the above-mentioned user group information that associates the user with the other subscribers in the group. This requires special group management in the mobile communication system.

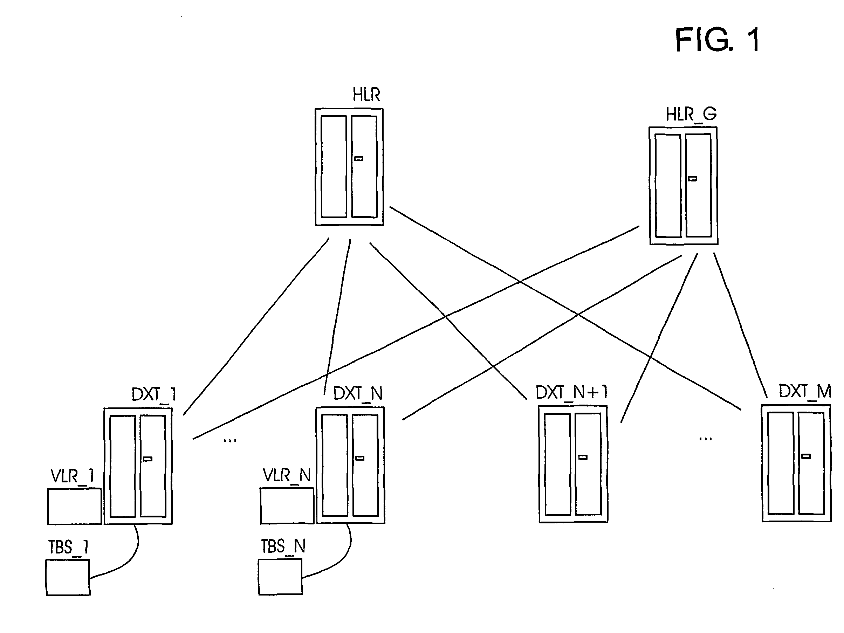

Figure 1 shows elements necessary for storing subscriber and location information in a TETRA architecture. An HLR (Home Location Register) comprises a subscriber database. The subscriber database maintains permanent and changing subscriber-related information. Changes in the subscriber information, such as changes in the location of a mobile station, are mainly effected in the home location register through mobile exchanges DXT_1...DXT_M.

In addition to the HLR elements, the network may comprise one or more VLR (Visitor Location Register) elements. An exchange and the VLR may be further combined into one element, i.e. a visited exchange, which refers to another exchange than the home exchange of the mobile station and which controls the traffic area in which the mobile station is located. In the TETRA system, the VLR can thus be located in connection with an exchange DXT. According to Figure 1, a base transceiver station TBS_1 can be connected to an exchange DXT_1.

In Figure 1, an HLR/G (Home Location Register/Group) designates a group home location register wherein the mobile station subscriber information may also be stored e.g. through the exchanges DXT_1...DXT_M. It is to be noted that this architecture only serves as an example and that the packet data solutions e.g. in the TETRA system employ a different architecture.

In the following, examples of two different approaches to group management will be described when the system works normally. According to the first approach, in normal circumstances, when the transmission paths between the exchange DXT serving the mobile station and the exchanges DXT storing the necessary subscriber information exist and work, when a mobile station MS is switched on and it registers in the network, the mobile station informs the serving exchange DXT e.g. about which groups it would like to receive, or listen. According to said first approach, groups have been preprogrammed and can be preprogrammed in mobile stations by a programming device or over an air interface from the network. The group information is thus controlled by the mobile station MS.

The mobile exchange DXT (or some other serving network element in a different network architecture), in turn, informs the mobile station MS e.g. about whether the mobile station is being served within the area of the particular exchange DXT and whether or not it can be a member of a group. If the mobile station MS is not e.g. configured for the particular exchange, the serving exchange DXT can inform the mobile station MS that the mobile station is not allowed to communicate through that exchange, and the connection of the mobile station MS to the particular exchange DXT can be disconnected. Through its user interface, the mobile station MS can also display information on the groups to its user. For example, changes in the size of a group can be indicated to the user.

The mobile station MS thus informs the serving exchange what the groups are when it registers in the network. The serving exchange stores the group information and uses it in call setup, e.g. when selecting the group call area. The groups remain in the memory of the exchange even if the subscriber changes cells. When the subscriber switches over to a new exchange, the information is retrieved from the old location exchange DXT, which can be e.g. a combination of an exchange and a visitor location register: when the mobile station MS moves from the area of one base transceiver station to the area of another, the group information will be provided in the exchange serving the particular base transceiver stations. If the mobile station MS moves from the area of one base transceiver station to the area of another such that the serving exchange DXT is simultaneously changed, the group traffic information has to be made available to the new exchange DXT. This mainly takes place such that the new exchange DXT requests the previous exchange DXT to deliver this information. If the connection to the previous exchange DXT does not work, the new exchange DXT may request the group traffic information from the mobile station's home location register HLR, which is in the home network. If this connection does not work either, the group traffic information must be obtained from somewhere else.

The second approach to group management is to use groups controlled by the system. Group information is then loaded using a group information programming element called DGNA (Dynamic Group Number Assignment), which element can be used for programming the group information over an air interface from the subscriber's home exchange to the mobile station each time the mobile station MS registers in the network. The DGNA programming element thus enables the user to add/remove members to/from the group traffic groups over the air interface.

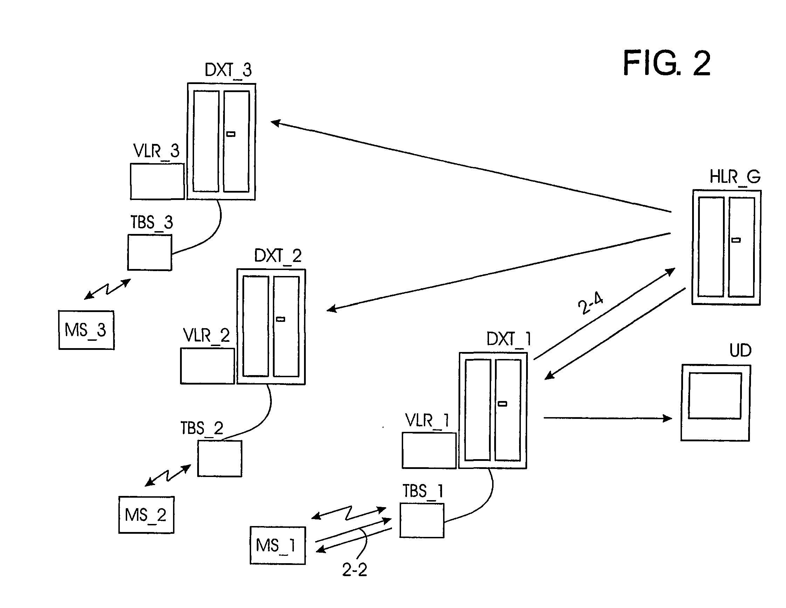

Figure 2 illustrates a group call in a situation wherein the exchange DXT has a connection to the home location register HLR/G of the group. In step 2-2, a subscriber MS_1 initiates a call to a desired group. In step 2-4, the exchange DXT_1 transmits a request to the exchange which controls group call setup, if such an exchange is available. In the next step, the exchange controlling group call setup or a local exchange DXT_1...DXT3 can set up a group call to other subscribers MS2, MS3 and a dispatcher UD, and give a speech item to the subscriber requesting it.

If, due to an error situation, the serving exchange DXT does not have a connection to the subscriber's home location register or old location register, the serving exchange does not know the subscriber's group traffic groups, which means that the correct group traffic cannot be transmitted to the subscriber. All traffic should be transmitted to all cells, which, in turn, would jam the radio resources designed according to a normal subscriber density.

A known way to find the subscribers in a group when a group call is being initiated is to page the subscribers through all cells using a group call identifier and to request mobile stations that identify the group call identifier to reply. If no replies appear, there are no members of the particular group traffic group in the cell, and the cell will not be included in the call. If there is one reply or if replies collide, the cell must be included in the call. If such paging is conducted before the call, call setup will be delayed. For example, in some public radio networks called PLMN (Public Land Mobile Network), such as NMT (Nordic Mobile Telephone) and GSM (Global System for Mobile Communications), and in some special radio networks called PMR (Private Mobile Radio), such as TETRA (TErrestrial Trunked RAdio), the subscriber is paged by transmitting a call on the control channels of all cells if the subscriber's location in the visitor location register VLR is not known e.g. due to a restart or if the subscriber's cell in the location area of several cells is to be determined.

A further known way is to reserve a traffic channel from each cell and then page over the traffic channel, whereafter unnecessary channels are released. Also this alternative causes unnecessary signalling and reserves channel resources unnecessarily. For example, in a system called Actionet (based on MPT standards) by Nokia, the channels are reserved for a group call from each cell in the area of the group, unnecessary channels being released after two seconds from the beginning of the call if no subscriber replies to the paging conducted over the traffic channel.

A further problem in all these alternatives still is that the network is incapable of informing the subscriber that the subscriber is outside the area of the group. The subscriber cannot change groups but remains in the cell to which the exchange does not transmit the traffic of the particular group, expecting traffic from this group.

The present invention provides a novel way in which group traffic can be made to work also in such an isolated exchange DXT without the drawbacks described above. According to the invention, after having detected that the group information cannot be obtained from the subscriber's home exchange or old location exchange, the exchange DXT (or some other serving network element in a different network architecture) is, according to the invention, arranged to ask the subscriber's mobile station MS for the group traffic groups programmed therein. The mobile station MS replies by reporting the groups programmed therein. The exchange DXT checks whether the subscriber is located in the area of each group and accordingly acknowledges this to the mobile station MS. The mobile station MS can show the user, i.e. the subscriber, the information on the groups that are available in the particular cell. The exchange DXT stores the received group information and uses it for maintaining normal group traffic.

The invention enables the group traffic to continue normally at the base transceiver stations connected to the particular exchange DXT without any additional procedures in connection with call setup.

The invention enables group calls to be set up fast also in error situations and the calling channel load to be reduced when no subscriber paging before the call setup is necessary.

The invention lowers the reservation level of traffic channels, thus increasing the percentage of successful calls at a desired delay since traffic channels are no longer reserved from unnecessary cells and no attempts to do so are made either.

In addition, if the subscriber's home exchange is not available, the subscribers can be served also at a totally isolated local exchange by combining the invention with the default profile of a subscriber.

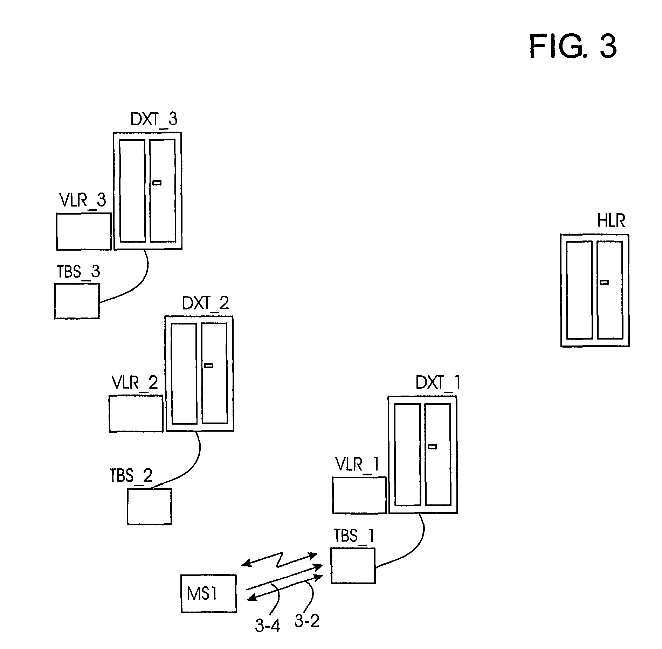

Figure 3 illustrates updating the subscriber group information in a situation wherein the exchange DXT_1, due to an error situation, has no connection to the subscriber's home location register HLR or old location exchange DXT_2. When the mobile station MS1 then moves and changes base transceiver stations such that the location exchange DXT_2 is changed simultaneously, the new location exchange DXT_1 does not know the group information on the mobile station MS1, and the correct group traffic cannot be transmitted to the subscriber. Since the subscriber has thus changed his or her location, and the home location register HLR and the old location exchange DXT_2 are unavailable, the subscriber's call rights and group information cannot be retrieved to the new location exchange DXT_1.

In order to enable group traffic to work also at the isolated exchange DXT_1, a group report request of the invention is used. It enables the exchange DXT to ask the mobile station MS_1 for information on the groups that are programmed in the mobile station MS_1 before an error situation occurs, e.g. in connection with the first registration in the network, as described above. In order to obtain the group information, such as the group identifier and class of usage, and possible other information, the exchange transmits a report request to the subscriber station MS. In step 3-2, using the group report, the exchange asks the subscriber what the groups are. The MS replies to the request by reporting the groups, i.e. the subscriber returns both the information on the groups it belongs to and possible other information to the exchange DXT_1 in step 3-4. After receiving the group report, the exchange DXT_1 checks whether the subscriber is located at a base transceiver station that belongs to the area of each group, and acknowledges the groups as active or passive to the subscriber. This enables the subscriber to avoid believing that he or she is actively participating in a group although the cell where the subscriber is currently located does not belong to the cells of the service area defined for the group. The MS can use the groups within the scope of permissions received from the exchange. In addition, the MS can show the user the information on the groups that are available to the particular cell. The exchange DXT_1, in turn, can store the received group information and use it for maintaining normal group traffic.

It is obvious to one skilled in the art that as technology advances, the basic idea of the invention can be implemented in many different ways. The invention and its embodiments are thus not restricted to the examples described above but they may vary within the scope of the claims.

## Claims

1. A method for supporting group traffic in a telecommunication network enabling group traffic to be set up between members of a predetermined user group, in which method
a subscriber (MS_1, MS_2, MS_3) registers in a serving network element, in the telecommunication network,
said serving network element (DXT_1) in which the subscriber (MS_1, MS_2. MS_3) becomes registered asks a subscriber database (HLR) or another network element (DXT_2) which previously served the subscriber (MS_1, MS_2, MS_3) for information on at least one group traffic group defined for the subscriber (MS_1, MS_2, MS_3), on the basis of which group information said serving network element (DXT_1) is able to support the group traffic setup, **characterized in that**
if said serving network element (DXT_1), due to an error situation in the network, has no connection to said subscriber database (HLR) or another network element (DXT_2), the following procedures will be carried out:
said serving network element (DXT_1) asks the subscriber's mobile station (MS_1, MS_2, MS_3) being served for information on one or more group traffic groups programmed in the subscriber's mobile station (MS_1, MS_2. MS_3),
the subscriber's mobile station (MS_1, MS_2. MS_3) returns information on at least one group traffic group programmed in the mobile station to said serving network element (DXT_1), and
said serving network element (DXT_1) stores the received information and uses it for setting up group traffic in the service area of the network element (DXT_1).

2. A method as claimed in claim 1, **characterized in that** the subscriber database is the subscriber's home location register (HLR).

3. A method as claimed in claim 1 or 2, **characterized in that**
the serving network element (DXT_1), in response to receiving the group information from the subscriber's mobile station (MS_1. MS_2, MS_3), checks whether the subscriber (MS_1, MS_2, MS_3) is located in the area of each group included in the group information, and
the serving network element (DXT_1 transmits the information on the groups that are available to the subscriber (MS_1, MS_2, MS_3), information on the groups that are unavailable to the subscriber (MS_1, MS_2, MS_3), or both pieces of the information as an acknowledgement to the subscriber's mobile station (MS_1, MS_2, MS_3).

4. A serving network element (DXT) of a telecommunication network which is, in response to a subscriber (MS_1, MS_2, MS_3) registration, arranged to ask a subscriber database (HLR) or an serving network element (DXT_1) which previously served the subscriber and for information on group traffic groups of the subscriber (MS_1, MS_2, MS_3), and by means of this group information, to support group traffic setup in its service area, **characterized in that** in an error situation wherein the serving network element (DXT) has no connection to said subscriber database (HLR) or said previous serving network element (DXT_1), said serving network element (DXT) is arranged to ask the mobile station (MS_1, MS_2, MS_3) of said subscriber for information on at least one group traffic group programmed in the subscriber's mobile station (MS_1, MS_2, MS_3), to receive information on at least one group traffic group programmed in the mobile station from the subscriber's mobile station (MS_1, MS_2, MS_3), and to store the group information received from the mobile station (MS_1, MS_2, MS_3) and to use it for supporting the group traffic during the error situation.

5. A serving network element as claimed in claim 4, **characterized in that** the subscriber database is the subscriber's home location register (HLR).

6. serving network element as claimed in claim 4 or 5, **characterized in that** the serving network element (DXT_1), in response to receiving the group information from the subscriber's mobile station (MS_1, MS_2, MS_3), checks whether the subscriber (MS_1, MS_2, MS_3) is located in the area of each group included in the group information, and
the serving network element (DXT_1) transmits the information on the groups that are available to the subscriber (MS_1, MS_2, MS_3), information on the groups that are unavailable to the subscriber (MS_1, MS_2, MS_3), or both pieces of the information as an acknowledgement to the subscriber's mobile station (MS_1, MS_2, MS_3).

7. A serving network element (DXT) as claimed in claims 4 to 6, wherein the serving network element is an exchange.

## Patentansprüche

1. Verfahren zum Unterstützen von Gruppenverkehr in einem Telekommunikationsnetz, das es ermöglicht, dass Gruppenverkehr zwischen Mitgliedern einer vorbestimmten Anwendergruppe aufgebaut wird, wobei in dem Verfahren
ein Teilnehmer (MS_1, MS_2, MS_3) sich in einem bedienenden Netzwerkelement in dem Telekommunikationsnetz registriert,
das bedienende Netzwerkelement (DXT_1), in dem der Teilnehmer (MS_1, MS_2, MS_3) registriert wird, bei einer Teilnehmerdatenbank (HLR) oder einem anderen Netzwerkelement (DXT_2), das zuvor den Teilnehmer (MS_1, MS_2, MS_3) bedient hat, Informationen bezüglich zumindest einer für den Teilnehmer (MS_1, MS_2, MS_3) definierten Gruppenverkehrsgruppe anfragt, wobei auf Basis dieser Gruppeninformationen das Netzwerkelement (DXT_1) den Gruppenverkehrsaufbau unterstützen kann, **dadurch gekennzeichnet, dass**
wenn das bedienende Netzwerkelement (DXT_1) durch eine Fehlersituation im Netz keine Verbindung zur Teilnehmerdatenbank (HLR) oder einem anderen Netzwerkelement (DXT_2) hat, die folgenden Prozeduren durchgeführt werden:
das bedienende Netzwerkelement (DXT_1) fragt bei der bedienten Mobilstation (MS_1, MS_2, MS_3) des Teilnehmers Informationen bezüglich einer oder mehrerer in die Mobilstation (MS_1, MS_2, MS_3) des Teilnehmers programmierter Gruppenverkehrsgruppen an,
die Mobilstation des Teilnehmers (MS_1, MS_2, MS_3) gibt Informationen bezüglich zumindest einer in die Mobilstation programmierter Gruppenverkehrsgruppe an das bedienende Netzwerkelement (DXT_1) zurück, und
das Netzwerkelement (DXT_1) speichert die erhaltenen Informationen und verwendet sie zum Aufbau von Gruppenverkehr im Dienstgebiet des Netzwerkelementes (DXT_1).

2. Verfahren nach Anspruch 1, **dadurch gekennzeichnet, dass** die Teilnehmerdatenbank das Heimatortsregister (HLR) des Teilnehmers ist.

3. Verfahren nach Anspruch 1 oder 2, **dadurch gekennzeichnet, dass**
das bedienende Netzwerkelement (DXT_1) im Ansprechen auf das Erhalten der Gruppeninformationen von der Mobilstation (MS_1, MS_2, MS_3) des Teilnehmers überprüft, ob der Teilnehmer (MS_1, MS_2, MS_3) sich im Gebiet jeder Gruppe, die in der Gruppeninformationen enthalten ist, befindet, und
das bedienende Netzwerkelement (DXT_1) als eine Empfangsbestätigung an die Mobilstation (MS_1, MS_2, MS_3) des Teilnehmers übermittelt die Informationen bezüglich der Gruppen, die für den Teilnehmer (MS_1, MS_2, MS_3) verfügbar sind, Informationen bezüglich der Gruppen, die für den Teilnehmer (MS_1, MS_2, MS_3) nicht verfügbar sind, oder beide Informationsbestandteile.

4. Bedienendes Netzwerkelement (DXT) eines Telekommunikationsnetzes, das im Ansprechen auf eine Registrierung eines Teilnehmers (MS_1, MS_2, MS_3) eingerichtet ist, eine Teilnehmerdatenbank (HLR) oder ein bedienendes Netzwerkelement (DXT_1), das zuvor den Teilnehmer bedient hat, und nach Informationen bezüglich Gruppenverkehrsgruppen des Teilnehmers (MS_1, MS_2, MS_3) fragt, und mittels dieser Gruppeninformationen den Aufbau von Gruppenverkehr in seinem Dienstgebiet zu unterstützen, **dadurch gekennzeichnet, dass** in einer Fehlersituation, in der das bedienende Netzwerkelement (DXT) keine Verbindung zur Teilnehmerdatenbank (HLR) oder dem vorherigen bedienenden Netzwerkelement (DXT_1) hat, das bedienende Netzwerkelement (DXT) eingerichtet ist, bei der Mobilstation (MS_1, MS_2, MS_3) des Teilnehmers nach Informationen bezüglich zumindest einer in die Mobilstation (MS_1, MS_2, MS_3) des Teilnehmers programmierten Gruppenverkehrsgruppe zu fragen, Informationen bezüglich zumindest einer in die Mobilstation (MS_1, MS_2, MS_3) des Teilnehmers programmierten Gruppenverkehrsgruppe von der Mobilstation des Teilnehmers (MS_1, MS_2, MS_3) zu erhalten und die von der Mobilstation (MS_1, MS_2, MS_3) erhaltenen Gruppeninformationen zu speichern und sie zum Unterstützen des Gruppenverkehrs während der Fehlersituation zu verwenden.

5. Bedienendes Netzwerkelement nach Anspruch 4, **dadurch gekennzeichnet, dass** die Teilnehmerdatenbank das Heimatortsregister (HLR) des Teilnehmers ist.

6. Bedienendes Netzwerkelement nach Anspruch 4 oder 5, **dadurch gekennzeichnet, dass** das bedienende Netzwerkelement (DXT_1) im Ansprechen auf das Empfangen der Gruppeninformationen von der Mobilstation (MS_1, MS_2, MS_3) des Teilnehmers prüft, ob der Teilnehmer (MS_1, MS_2, MS_3) sich im Gebiet jeder in der Gruppeninformationen enthaltenen Gruppe befindet, und
dass das bedienende Netzwerkelement (DXT_1) als eine Empfangsbestätigung an die Mobilstation des Teilnehmers (MS_1, MS_2, MS_3) sendet die Informationen bezüglich der Gruppen, die für den Teilnehmer (MS_1, MS_2, MS_3) verfügbar sind, Informationen bezüglich der Gruppen, die für den Teilnehmer (MS_1, MS_2, MS_3) nicht verfügbar sind, oder beide Informationsbestandteile.

7. Bedienendes Netzwerkelement (DXT) nach Anspruch 4 bis 6, wobei das bedienende Netzwerkelement eine Vermittlung ist.

## Revendications

1. Procédé de support du trafic de groupe dans un réseau de télécommunications permettant au trafic de groupe d'être établi entre des membres d'un groupe d'utilisateurs prédéterminé, dans lequel procédé :
un abonné (MS_1, MS_2, MS_3) s'enregistre dans un élément de réseau de desserte, dans le réseau de télécommunications,
ledit élément de réseau de desserte (DXT_1) dans lequel l'abonné (MS_1, MS_2, MS_3) devient enregistré demande à une base de données d'abonnés (HLR) ou à un autre élément de réseau (DXT_2) qui a précédemment desservi l'abonné (MS_1, MS_2, MS_3) des informations sur au moins un groupe de trafic de groupe défini pour l'abonné (MS_1, MS_2, MS_3), sur la base desquelles informations de groupe ledit élément de réseau de desserte (DXT_1) est capable de supporter l'établissement du trafic de groupe, **caractérisé en ce que**
si ledit élément de réseau de desserte (DXT_1), en raison d'une situation d'erreur dans le réseau, n'a pas de connexion avec ladite base de données d'abonnés (HLR) ou un autre élément de réseau (DXT_2), les procédures suivantes sont effectuées :
ledit élément de réseau de desserte (DXT_1) demande à la station mobile de l'abonné (MS_1, MS_2, MS_3) qui est desservie des informations sur un ou plusieurs groupes de trafic de groupe programmés dans la station mobile de l'abonné (MS_1, MS_2, MS_3),
la station mobile de l'abonné (MS_1, MS_2, MS_3) renvoie les informations sur au moins un groupe de trafic de groupe programmé dans la station mobile au dit élément de réseau de desserte (DXT_1), et
ledit élément de réseau de desserte (DXT_1) stocke les informations reçues et les utilise pour établir un trafic de groupe dans la zone de service de l'élément de réseau (DXT_1).

2. Procédé selon la revendication 1, **caractérisé en ce que** la base de données d'abonnés est le registre d'emplacements de base (HLR) de l'abonné.

3. Procédé selon la revendication 1 ou 2, **caractérisé en ce que**
l'élément de réseau de desserte (DXT_1), en réponse à la réception des informations de groupe de la station mobile de l'abonné (MS_1, MS_2, MS_3), contrôle si l'abonné (MS_1, MS_2, MS_3) est situé dans la zone de chaque groupe inclus dans les informations de groupe, et
l'élément de réseau de desserte (DXT_1) transmet les informations sur les groupes qui sont à la disposition de l'abonné (MS_1, MS_2, MS_3), les informations sur les groupes qui ne sont pas à la disposition de l'abonné (MS_1, MS_2, MS_3), ou les deux informations sous la forme d'un accusé de réception à la station mobile de l'abonné (MS_1, MS_2, MS_3).

4. Elément de réseau de desserte (DXT) d'un réseau de communication qui est, en réponse à un enregistrement d'abonné (MS_1, MS_2, MS_3), agencé pour demander à une base de données d'abonnés (HLR) ou à un élément de réseau de desserte (DXT_1) qui a précédemment desservi l'abonné des informations sur des groupes de trafic de groupe de l'abonné (MS_1, MS_2, MS_3), et au moyen de ces informations de groupe, supporter l'établissement de trafic de groupe dans sa zone de service, **caractérisé en ce que** dans une situation d'erreur dans laquelle l'élément de réseau de desserte (DXT) n'a pas de connexion avec ladite base de données d'abonnés (HLR) ou avec ledit précédent élément de réseau de desserte (DXT_1), ledit élément de réseau de desserte (DXT) est agencé pour demander à la station mobile (MS_1, MS_2, MS_3) dudit abonné des informations sur au moins un groupe de trafic de groupe programmé dans la station mobile de l'abonné (MS_1, MS_2, MS_3), pour recevoir des informations sur au moins un groupe de trafic de groupe programmé dans la station mobile à partir de la station mobile de l'abonné (MS_1, MS_2, MS_3), et pour stocker les informations de groupe reçues de la station mobile (MS_1, MS_2, MS_3) et les utiliser pour supporter le trafic de groupe pendant la situation d'erreur.

5. Elément de réseau de desserte selon la revendication 4, **caractérisé en ce que** la base de données d'abonnés est le registre d'emplacements de base (HLR) de l'abonné.

6. Elément de réseau de desserte selon la revendication 4 ou 5, **caractérisé en ce que** l'élément de réseau de desserte (DXT_1), en réponse à la réception des informations de groupe de la station mobile de l'abonné (MS_1, MS_2, MS_3), contrôle si l'abonné (MS_1, MS_2, MS_3) est situé dans la zone de chaque groupe compris dans les informations de groupe, et
l'élément de réseau de desserte (DXT_1) transmet les informations sur les groupes qui sont à la disposition de l'abonné (MS_1, MS_2, MS_3), les informations sur les groupes qui ne sont pas à la disposition de l'abonné (MS_1, MS_2, MS_3), ou les deux informations sous la forme d'un accusé de réception à la station mobile de l'abonné (MS_1, MS_2, MS_3).

7. Elément de réseau de desserte (DXT) selon l'une des revendications 4 à 6, dans lequel l'élément de réseau de desserte est un échange.
